# EUROPEAN PATENT APPLICATION

(11) **EP 4 850 885 A2**
(43) Date of publication of application: **09.12.2026**
(21) Application number: 26183093.9
(22) Date of filing: 04.06.2026
(51) Int. Cl.: B29C 45/76

(54) **INJECTION MOULDING**

(30) Priority: 04.06.2025 FI 20255413
(71) Applicant: VILPE Oy, 65610 Mustasaari (FI)
(72) Inventor: HEISKANEN, Harri, 65280 Vaasa (FI)
(74) Representative: Laine IP Oy

(57) **Abstract**

According to an example aspect of the present invention, there is provided an apparatus configured to select a humidity threshold value based at least in part on an ambient humidity value obtained in the apparatus from an ambient humidity sensor and describing an ambient humidity of an injection moulding machine, obtain a feed material humidity value from a humidity sensor configured to be immersed in the feed material, and responsive to the feed material humidity value exceeding the humidity threshold value, trigger an alarm to be provided to one or more user, the alarm comprising an identity of the injection moulding machine, or modify a process parameter of the injection moulding machine.

## Description

### FIELD

The present disclosure relates to the field of injection moulding using injection moulding machines.

### BACKGROUND

Injection moulding is used to produce products by injection of a molten feed material into a mould, where the feed material solidifies to form the product that it is desired to be produced. Suitable feed materials include a large array of thermoplastic and thermosetting polymers, as well as other types of feed material depending on the application at hand. A same mould is typically used for a large number of products, meaning the moulds tend to be re-usable and be made of a durable material, such as metal, such as steel, for example.

Often injection moulding is used to produce items of plastic, wherein the mould may be made of a metal with a melting point clearly in excess of temperatures where the plastic feed material may be melted to form the molten feed material.

### SUMMARY

According to some aspects, there is provided the subject-matter of the independent claims. Some embodiments are defined in the dependent claims.

According to a first aspect of the present disclosure, there is provided an apparatus comprising at least one processing core and at least one memory storing instructions that, when executed by the at least one processing core, cause the apparatus at least to select a humidity threshold value based at least in part on an ambient humidity value obtained in the apparatus from an ambient humidity sensor and describing an ambient humidity of an injection moulding machine, obtain a feed material humidity value from a humidity sensor configured to be immersed in the feed material, and responsive to the feed material humidity value exceeding the humidity threshold value, trigger an alarm to be provided to one or more user, the alarm comprising an identity of the injection moulding machine, or modify a process parameter of the injection moulding machine.

According to a second aspect of the present disclosure, there is provided a method in an apparatus, comprising selecting a humidity threshold value based at least in part on an ambient humidity value obtained in the apparatus from an ambient humidity sensor and describing an ambient humidity of an injection moulding machine, obtaining a feed material humidity value from a humidity sensor immersed in the feed material, and responsive to the feed material humidity value exceeding the humidity threshold value, triggering an alarm to be provided to one or more user, the alarm comprising an identity of the injection moulding machine, or modify a process parameter of the injection moulding machine.

According to a third aspect of the present disclosure, there is provided a non-transitory computer readable medium having stored thereon a set of computer readable instructions that, when executed by at least one processor, cause an apparatus to at least select a humidity threshold value based at least in part on an ambient humidity value, obtained in the apparatus from an ambient humidity sensor and describing an ambient humidity of an injection moulding machine, obtain a feed material humidity value from a humidity sensor immersed in the feed material, and responsive to the feed material humidity value exceeding the humidity threshold value, trigger an alarm to be provided to one or more user, the alarm comprising an identity of the injection moulding machine, or modify a process parameter of the injection moulding machine.

According to a fourth aspect of the present disclosure, there is provided a method, comprising storing a database comprising, for plural production lots of an injection moulding machine, a rate of defective products in the respective lot, and for each production lot a set of ambient conditions of the injection moulding machine, the set of ambient conditions being measured during a time when the injection moulding machine produced the lot, including, in the database for each one of the plural production lots, temperature and humidity data of an feed material of the injection moulding machine used in the production of the respective lot, selecting from among the plural production lots a lot for which the set of ambient conditions and the set of feed material humidity and feed material temperature most closely matches a set of current ambient conditions, a current feed material humidity and a current feed material temperature, and displaying to a user the rate of defective products of the selected production lot.

### BRIEF DESCRIPTION OF THE DRAWINGS

FIGURE 1 illustrates an example injection moulding machine in accordance with at least some embodiments of the present invention;
FIGURE 2A illustrates example thresholds;
FIGURE 2B illustrates a database comprising injection moulding information;
FIGURE 3 illustrates an example apparatus capable of supporting at least some embodiments of the present invention, and
FIGURE 4 is a flow graph of a method in accordance with at least some embodiments of the present invention.

### EMBODIMENTS

Environmental conditions affect the success of injection moulding processes, such as injection moulding of various plastics. An interaction between environmental and feed material humidity, for example, has an effect on a defect rate in resulting injection moulded products. Disclosed herein are methods to manage defect rates and to increase the awareness human operators have of a current technical state of an injection moulding machine and process in terms of an ongoing defect rate. For example, if feed material humidity exceeds a threshold, the defect rate may increase and operators may be made aware of this, so they may, for example, increase a temperature of the injection moulding process or a power at which feed material is heated prior to injection moulding, so as to reduce the amount of moisture that is caried into the mould by the feed material. A database may be maintained which associates sets of ambient and feed material physical properties with a previously determined defect rate, such that operators may become aware of an expected defect rate of a production lot currently being produced.

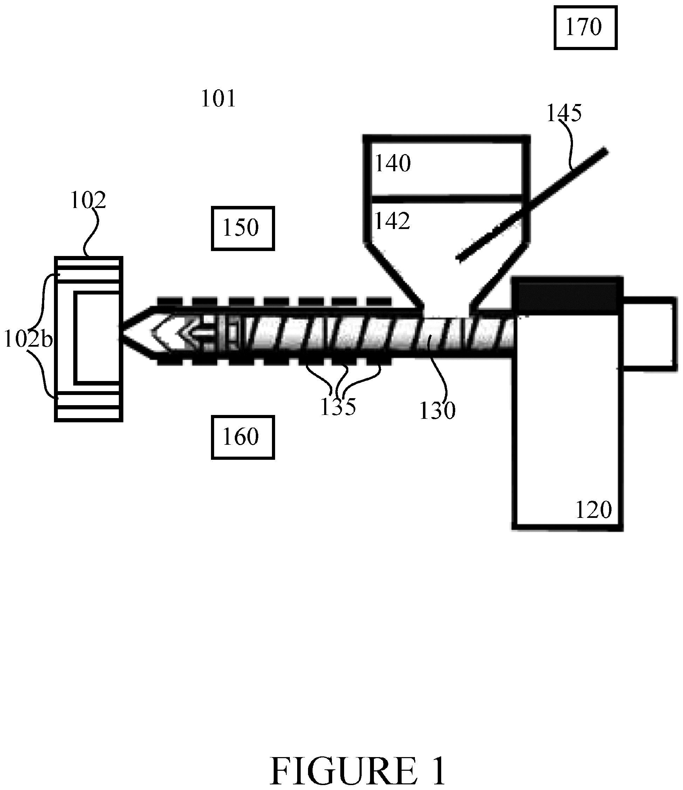

FIGURE 1 illustrates an example injection moulding machine in accordance with at least some embodiments of the present invention. Injection moulding machine 101 comprises a drive mechanism 120 configured to power screw 130 to force feed material from hopper 140 to a mould 102, to the left of screw 130 in FIGURE 1. Screw 130 is provided with heaters 135 to heat the feed material and keep it in a molten state as it is extruded into mould 102. Injection moulding machine 101 works with mould 102, but injection moulding machine 101 doesn't comprise mould 102, rather, injection moulding machine 101 can be operated with different moulds 102. Hopper 140 comprises a granular feed material 142, which is allowed to gravitationally fall into screw 130 for extrusion into mould 102.

An ambient humidity sensor 150 is installed near the injection moulding machine 101 and configured to repeatedly measure a humidity of air surrounding the injection moulding machine. By being installed near the injection moulding machine it is herein meant, that the ambient humidity sensor is installed on the outside of the injection moulding machine, or within a distance of 4 metres or less, for example 2 to 4 metres, from the injection moulding machine, for example. Ambient humidity sensor 150 may be configured to measure the humidity of air periodically at a constant periodicity, for example every second or every ten seconds, for example, and to provide the so obtained ambient humidity values to a control device 170. Ambient humidity may be expressed as absolute humidity, not taking air temperature into account.

The control device 170 may be an apparatus comprising at least one processing core and at least one memory storing instructions that, when executed by the at least one processing core, cause the control device to perform as herein described. For example, the control device may be a laptop computer, server computer, tablet computer or generalpurpose computer. The control device may comprise communication port(s) to receive sensor values from sensors connected with the control device. The control device may be a cloud computing substrate configured to perform a control method as herein described.

Humidity sensor 145 is configured to be immersed in granular material 142 which is used in the injection moulding machine 101 as feed material. Humidity sensor 145 may be immersed into the granular feed material in hopper 140, in a conveyor system through which the feed material is provided to the hopper or in a storage container where the feed material is stored prior to being moved into hopper 140, for example. Humidity sensor 145 may be configured to measure the humidity of the feed material periodically at a constant periodicity such as every second or every ten seconds, for example, and to provide the so obtained feed material humidity values to control device 170. The periodicity need not be the same as in the ambient humidity sensor. The feed material may be granular material, such as polyethylene terephtalate, PET, high-density polyethylene or polypropylene granules, for example. Feed material humidity may be expressed as absolute humidity, not taking temperature into account. Feed material humidity may be a humidity of air between granules of the feed material, or the feed material humidity may be humidity of the feed material itself, determined by sampling the feed material. When the humidity of the air between feed material granules is used, the sensor should be buried in the feed material to a depth of at least 20cm from a top surface of the feed material layer.

A feed material temperature sensor may likewise be configured to be immersed in the granular material which is used in the injection moulding machine 101 as feed material. Also the feed material temperature sensor may be placed in the hopper, in the conveyor system through which the feed material is provided to the hopper or in the storage container where the feed material is stored prior to being moved into hopper 140. The feed material temperature sensor, where present, is configured to provide feed material temperature values to the control device, for example periodically at a fixed periodicity which may be the same, or different from a periodicity used in the ambient humidity sensor and/or the humidity sensor 145. The feed material temperature sensor may be located in a same sensor apparatus as humidity sensor 145, for example. In this case, the humidity sensor 145 further comprises a temperature sensor element which is configured to output temperature values.

The control device 170, such as a computer, is configured to select a humidity threshold based, at least in part, on the ambient humidity value from the ambient humidity sensor. For example, the humidity threshold may be selected by adding an increment to a base humidity threshold, the increment being selected based on the ambient humidity value such that the increment is negative when the ambient humidity value is above an ambient threshold and the increment is positive when the ambient humidity value is below the ambient threshold. The humidity threshold is thus a sum of the base humidity threshold and the increment. The humidity threshold may be expressed as absolute humidity, not taking temperature into account. The base humidity threshold may be selected based on a type of feed material, for example. The humidity threshold may be referred to as a humidity threshold value, since it is defined by a numerical value.

In other words, if the ambient humidity is higher, the humidity threshold is set lower and when the ambient humidity is lower, the humidity threshold is higher. This is so, since when the ambient humidity is lower the feed material is expected to absorb less humidity from the air. On the other hand, when the ambient humidity is higher, the feed material is expected to absorb more humidity from the air and thus can contain less humidity to begin with, so as to not become so humid as to adversely affect the injection moulding process. In other words, the ambient humidity affects an effective humidity of the feed material when it is used in the injection moulding process. This is also the case, when the humidity of the air between feed material granules is used as the feed material humidity.

The control device is configured to compare the feed material humidity value to the selected humidity threshold, and responsive to the feed material humidity value exceeding the humidity threshold, the control device is configured to trigger an alarm to be provided to one or more user of the injection moulding machine. The alarm comprises an identity of the injection moulding machine, to enable the user(s) to identify which injection moulding machine the alarm relates to in a factory setting where plural injection moulding machines may be operating. The user(s) may then take steps to remedy the feed material humidity, including increasing a heating power in the hopper to dry the feed material prior to injection.

In some embodiments, the control device is configured to, responsive to the feed material humidity value exceeding the humidity threshold, automatically increase a hopper heating power without user intervention, for example by increasing the heating power by a predetermined percentage of a current hopper heating power, for example by 5% or 8%. More generally, in these embodiments the control device is configured to modify a process parameter of the injection moulding machine responsive to the feed material humidity value exceeding the humidity threshold.

The alarm provided by the control device is technical in nature as it characterizes the technical state of the injection moulding process, namely the determined effective humidity content of the feed material in the injection moulding process.

The control device is, in some embodiments, configured to select the humidity threshold further based on an ambient temperature value obtained from an ambient temperature sensor 160. The ambient temperature value describes an ambient temperature of the injection moulding machine, the ambient temperature sensor 160 being positioned, when in use, on the outside of the injection moulding machine, or within a distance of less than 4 metres, for example 2 to 4 metres, from the injection moulding machine, for example. For example, responsive to the ambient temperature being higher the humidity threshold may be set higher, and responsive the ambient temperature being lower the humidity threshold may be set lower. This is so, since warmer air may more easily contain more water vapour without depositing it on or in the feed material. In particular, the control device may determine relative ambient humidity around the injection moulding machine, and responsive to this relative humidity of the ambient air around the injection moulding machine exceeding a relative humidity threshold, the humidity threshold may be lowered and/or the alert may be triggered. This provides the benefit, that condensation of moisture from air into the feed material may be avoided. In some embodiments, the control device monitors relative humidity using the ambient humidity value and ambient temperature value, and automatically, without user intervention, modifies a process parameter, such as increases hopper heating power as a response to the relative humidity value exceeding a relative humidity threshold. A relative humidity threshold may be, for example, 80% or 90%.

The control device is, in some embodiments, configured to select the humidity threshold further based on an ambient air pressure value obtained from an ambient air pressure sensor. The ambient air pressure value describes an ambient air pressure of the injection moulding machine, the ambient air pressure sensor being positioned, when in use, on the outside of the injection moulding machine, or within a distance of 2 to 4 metres from the injection moulding machine, for example. This ambient air pressure can be used to determine an optimal mould clamping force for an injection moulding machine. This facilitates efficiently removing air from mould surfaces during the clamping phase, preventing air from being trapped inside the mould tool. Insufficient clamping force leads to the formation of burrs on products and results in defective product batches. On the other hand, excessive clamping force consumes too much energy and strains the mould tool, and if air remains trapped in the mould, it may cause surface changes to the product due to the burning driven by this air. Thus the control device may be configured to select the humidity threshold based at least in part on the ambient humidity, the ambient humidity and the ambient temperature, or the ambient humidity, the ambient temperature and the ambient air pressure. In particular, the control device may be configured to select the humidity threshold based at least in part on the ambient humidity, and to select a clamping force for the mould based at least in part on the ambient air pressure.

Overall changes in ambient properties around the injection moulding machine, such as humidity and temperature, tend to have the effect that cycle times vary in an injection moulding process, reducing the predictability of production rate and defect rates.

In some embodiments, control device 170 is further configured to obtain a water flow velocity in a cooling channel 102b in mould 102 used with the injection moulding machine 101, and to trigger an alert to be provided to the one or more user, the alert comprising an identity of the injection moulding machine and an indication the alert relates to water flow, the control device being configured to perform the triggering of the alert responsive to the water flow velocity falling below a threshold velocity. The control device may be configured to select the threshold velocity based on an average of the water flow velocity over a period of time, so that the alert is triggered if the flow rate of water decreases during operation. For example, the control device may select the threshold velocity as an average water flow velocity during the time period, or as a percentage, such as 80% or 90%, of the average water flow velocity during the time period. If water flow rate decreases, the water flow can remove less heat from the mould, which may affect production as it takes longer to produce each product, and the mould may thermally deform, impacting quality. Thus is user(s) are made aware of the decline in water flow rate, and take steps to remedy this by cleaning the cooling channels of the mould, for example. The water flow velocity in the cooling channel(s) may decline if the channel(s) become partially clogged, for example. The water flow velocity is obtained in the control device from a flow sensor installed in the cooling channel, or in a feed pipe configured to feed water into or from the cooling channel. The flow sensor may be configured to determine the flow velocity at a constant periodicity, such as every ten seconds or once every minute, for example.

Additionally, cycle time of the injection moulding process may be obtained by measuring any a repeat rate of a process phase that repeats consistently during the injection molding cycle, such as mould closing or opening, injection start, dosing start, or ejection, for example. Data may be recorded from a first approved test run of each mould tool, specifying the machine type, raw material, mould tool, product identifier, and the injection moulding machine's operating parameters and unit time. This enables comparing the actual cycle time of the mould tool to the original unit time.

From this, it is possible to establish metrics for mould maintenance, defining maintenance intervals for the mould tool channels based on reduced water flow and increased cycle time compared to historical values and the original unit time. This leads to significant energy savings and enables timely maintenance on the relevant mould. The mould, or mould tool, is a device required for injection moulding, made by machining durable materials such as tool steel. The mould is always designed and manufactured according to the product and specific needs.

A further method is also herein described, which may be used in addition to, or alternatively to, the method described herein above. In detail, this method comprises storing a database comprising, for each one of plural production lots of an injection moulding machine, a data structure comprising a rate of defective products in the respective lot, and for the each respective production lot a set of ambient conditions around the injection moulding machine, the set of ambient conditions being measured during a time when the injection moulding machine produced the respective lot. The ambient conditions may comprise, for example, the ambient humidity and/or ambient temperature.

The method further comprises including, in the data structures of each one of the plural production lots, temperature and humidity data of the feed material of the injection moulding machine used in the production of the respective lot. The temperature and humidity data of the feed material may be obtained as described herein above, for example.

During runtime, the method then comprises selecting from among the plural data structures a data structure comprising information on a lot for which the set of ambient conditions and the set of feed material humidity and feed material temperature most closely matches a set of current ambient conditions, a current feed material humidity and a current feed material temperature. Finally, the rate of defective products of the selected production lot is displayed to the user(s).

For example, the selecting of the lot for which the set of ambient conditions and the set of feed material humidity and feed material temperature most closely matches a set of current ambient conditions may comprise considering each of the ambient conditions and feed material humidity and feed material temperature as coordinates in a coordinate space of dimension equal to the number of ambient conditions plus two from the feed material humidity and temperature, thus if humidity and temperature are the ambient conditions, then the dimension of the coordinate space is four. The selecting then comprises determining the lot for which the distance in four-dimensional coordinate space is smallest to the current ambient conditions and feed material temperature and humidity.

This database can be compared to error codes logged for defective products in production, allowing for the creation of cause-and-effect relationships and a situational overview of necessary improvements to workplace environmental conditions, considering payback time. Payback time refers to a pricing method used in companies to calculate an amortization period of injection moulding moulds and machines through the products they produce. The amortization period is significantly influenced by variable costs such as electricity consumption, raw material prices, maintenance and upkeep costs, and material waste.

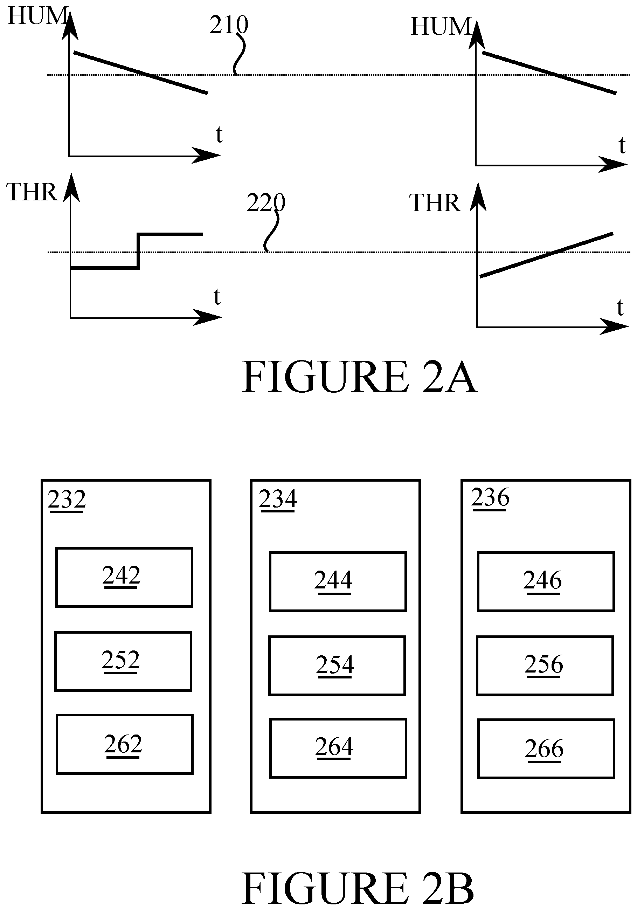

FIGURE 2A illustrates example thresholds. On the left are two coordinate systems wherein the horizontal axis is a time axis. The two time axes are aligned with each other. In the lower case the vertical axis corresponds to the selected humidity threshold, and in the upper case the vertical axis corresponds to the ambient humidity value. Initially, the ambient humidity is above the ambient threshold 210, but as time advances it declines to fall beneath ambient threshold 210. The selected humidity threshold increases, in the example of FIGURE 2A, left, when the ambient humidity passes ambient threshold 210 as the increment added to base humidity threshold 220 is changed from a negative increment to a positive increment.

On the other hand in FIGURE 2A, right, where the axes correspond to those on the left, the increment added to the base humidity threshold 220 is a linear function of the ambient humidity, wherein the increment increases as ambient humidity decreases. Alternatively, the increment may be seen to be a linear function of the expression ( HUM - ambient threshold 210 ), such that when ambient humidity is equal to the ambient threshold, the increment is zero, and as the ambient humidity declines further the increment becomes increasingly positive as a linear function of the ambient humidity. In the other direction, as ambient humidity increases, the increment becomes increasingly negative as a linear function of the ambient humidity.

FIGURE 2B illustrates a database comprising injection moulding information. The database comprises plural data structures 232, 234, 236, of which three are illustrated in the figure, however the number of structures may be lower or higher than three. Each data structure corresponds to a production lot. Data structure 232, corresponding to a first production lot, comprises ambient conditions 242, feed material temperature and humidity 252, and defect rate 262 of the first production lot. Data structure 234, corresponding to a second production lot, comprises ambient conditions 244, feed material temperature and humidity 254, and defect rate 264 of the second production lot. Data structure 236, corresponding to a third production lot, comprises ambient conditions 246, feed material temperature and humidity 256, and defect rate 266 of the third production lot.

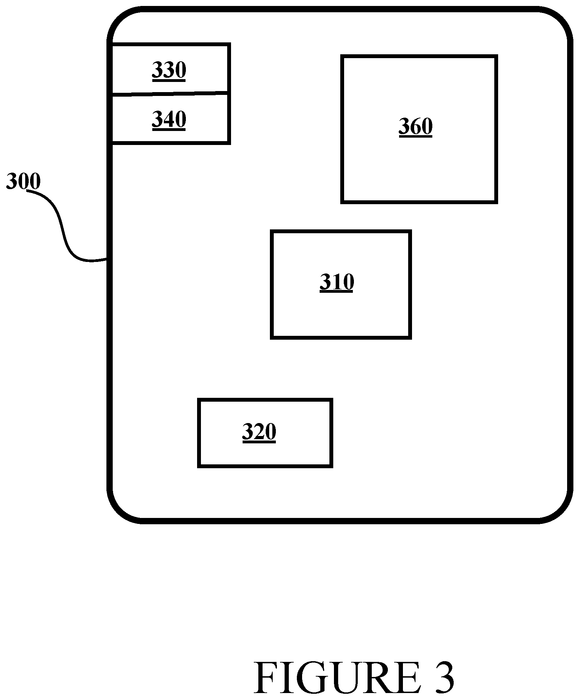

FIGURE 3 illustrates an example apparatus capable of supporting at least some embodiments of the present invention. Illustrated is device 300, which may comprise, for example, a control device as described herein above. Comprised in device 300 is processor 310, which may comprise, for example, a single- or multi-core processor wherein a singlecore processor comprises one processing core and a multi-core processor comprises more than one processing core. Processor 310 may comprise, in general, a control device. Processor 310 may comprise more than one processor. When processor 310 comprises more than one processor, device 300 may be a distributed device wherein processing of tasks takes place in more than one physical unit. Processor 310 may be a control device. A processing core may comprise, for example, a Cortex-A8 processing core manufactured by ARM Holdings or a Zen processing core designed by Advanced Micro Devices Corporation. A processing core or processor may be, or may comprise, at least one qubit. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310, optionally together with memory and computer instructions, may be means for performing method steps in device 300, such as storing, including, selecting, displaying, obtaining and triggering. Processor 310 may be configured, at least in part by computer instructions, to perform actions.

Device 300 may comprise memory 320. Memory 320 may comprise random-access memory and/or permanent memory. Memory 320 may comprise at least one RAM chip. Memory 320 may be a computer readable medium. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part external to device 300 but accessible to device 300. Memory 320 may be transitory or non-transitory. The term "non-transitory", as used herein, is a limitation of the medium itself (that is, tangible, not a signal) as opposed to a limitation on data storage persistency (for example, RAM vs. ROM). Sensor data, for example measured time-dependent humidity values associated with a respective production lot, measured time-dependent temperature values associated with a respective production lot, measured time-dependent flow rate values associated with a respective production lot, measured time-dependent feed material humidity values, relative humidity threshold data, reference water flow velocity threshold data and/or reference mass flow threshold values may be stored in memory 320, for instance.

Device 300 may comprise a transmitter 330. Device 300 may comprise a receiver 340. Transmitter 330 and receiver 340 may be configured to transmit and receive, respectively, information in accordance with at least one standard. Transmitter 330 may comprise more than one transmitter. Receiver 340 may comprise more than one receiver. Receiver 340 may be configured to, for example, receive sensor values from sensors external to device 300. For example, measured data or an alarm or alert signal may be transmitted to a node or external display by transmitter 330. For example, ambient humidity values, water flow velocity values and/or reference mass flow data may be received by receiver 340.

Device 300 may comprise user interface, UI, 360. UI 360 may comprise at least one of a display, a keyboard, a touchscreen, a vibrator arranged to signal to a user by causing device 300 to vibrate, a speaker or a microphone. A user may be able to operate device 300 via UI 360, for example to configure injection moulding parameters and/or receive alarms and alerts. UI 360 may be configured to provide an alarm or alert to one or more user, such as, by displaying it in a display comprised in UI 360.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver. For example, processor 310 may be configured to compare measured time-dependent humidity values with the humidity threshold.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above.

Processor 310, memory 320, transmitter 330, receiver 340 and/or UI 360 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

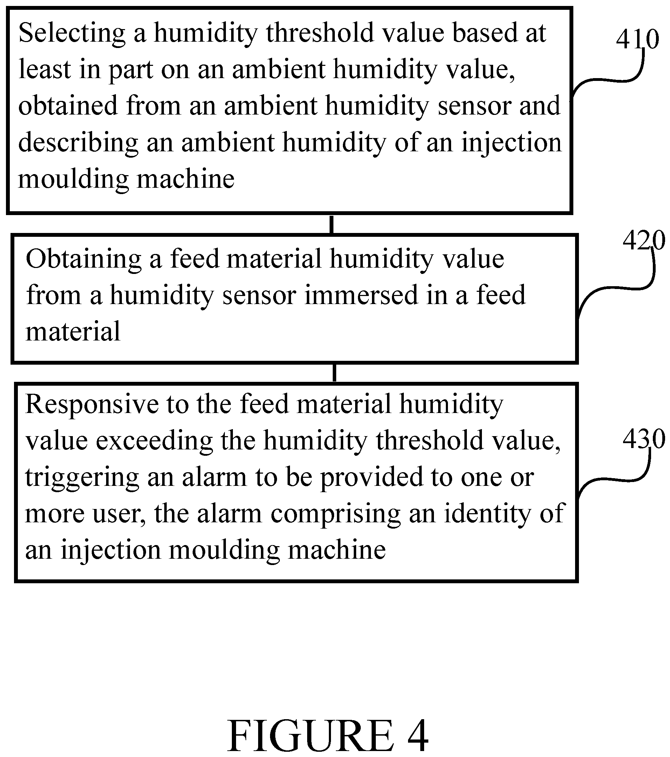

FIGURE 4 is a flow graph of a method in accordance with at least some embodiments of the present invention. Phase 410 comprises selecting a humidity threshold value based at least in part on an ambient humidity value, obtained in the apparatus from an ambient humidity sensor and describing an ambient humidity of an injection moulding machine. Phase 420 comprises obtaining a feed material humidity value from a humidity sensor immersed in the feed material. Finally, phase 430 comprises, responsive to the feed material humidity value exceeding the humidity threshold value, triggering an alarm to be provided to one or more user, the alarm comprising an identity of the injection moulding machine.

In case the feed material humidity value does not exceed the humidity threshold value, the alarm is not triggered.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

### INDUSTRIAL APPLICABILITY

At least some embodiments of the present invention find industrial application in injection moulding.

### ACRONYMS LIST

PET polyethylene terephtalate

### REFERENCE SIGNS LIST

| | |
|---|---|
| 110 | Definition |
| | |
| 210 | ambient threshold |
| 220 | base humidity threshold |
| 232, 234, 236 | data structure |
| 242, 244, 246 | ambient conditions |
| 252, 254, 256 | feed material temperature and humidity |
| 262, 264, 266 | defect rate |
| 300 - 360 | structure of the device of FIGURE 3 |
| 410 - 430 | phases of the method of FIGURE 4 |

## Claims

1. An apparatus (170, 300) comprising at least one processing core (310) and at least one memory (320) storing instructions that, when executed by the at least one processing core (310), cause the apparatus (170, 300) at least to:
- select (410) a humidity threshold value based at least in part on an ambient humidity value obtained in the apparatus (170, 300) from an ambient humidity sensor (150) and describing an ambient humidity of an injection moulding machine (101);
- obtain (420) a feed material humidity value from a humidity sensor (145) configured to be immersed in the feed material, and
- responsive to the feed material humidity value exceeding the humidity threshold value, trigger (430) an alarm to be provided to one or more user, the alarm comprising an identity of the injection moulding machine (101), or modify (430) a process parameter of the injection moulding machine (101).

2. The apparatus (170, 300) according to claim 1, configured to perform the selecting (410) of the humidity threshold by obtaining the humidity threshold by adding an increment to a base humidity threshold, the increment being selected based on the ambient humidity value such that the increment is negative when the ambient humidity value is above an ambient threshold and the increment is positive when the ambient humidity value is below the ambient threshold.

3. The apparatus (170, 300) according to claim 1 or 2, configured to perform the selecting (410) of the humidity threshold value further based on an ambient temperature value obtained in the apparatus (170, 300) from an ambient temperature sensor (160) and describing an ambient temperature of the injection moulding machine (101).

4. The apparatus (170, 300) according to any of claims 1 - 3, configured to perform the selecting (410) of the humidity threshold value further based on an ambient air pressure value obtained in the apparatus (170, 300) from an ambient air pressure sensor and describing an ambient air pressure of the injection moulding machine (101).

5. The apparatus (170, 300) according to any of claims 1 - 3, further configured to obtain a water flow velocity in a cooling channel in a mould of the injection moulding machine (101), and to trigger an alert to be provided to the one or more user, the alert comprising an identity of the injection moulding machine (101) and an indication the alert relates to water flow, the apparatus being configured to perform the triggering of the alert responsive to the water flow velocity falling below a threshold velocity.

6. The apparatus (170, 300) according to claim 5, further configured to select the threshold velocity based on an average of the water flow velocity over a period of time.

7. A system comprising the apparatus (170, 300) according to one of claims 1 - 6, the injection moulding machine (101), the ambient humidity sensor (150) and the humidity sensor(145).

8. A method in an apparatus (170, 300), comprising:
- selecting (410) a humidity threshold value based at least in part on an ambient humidity value obtained in the apparatus (170, 300) from an ambient humidity sensor (150) and describing an ambient humidity of an injection moulding machine (101);
- obtaining (420) a feed material humidity value from a humidity sensor (145) immersed in the feed material, and
- responsive to the feed material humidity value exceeding the humidity threshold value, triggering (430) an alarm to be provided to one or more user, the alarm comprising an identity of the injection moulding machine (101), or modify (430) a process parameter of the injection moulding machine (101).

9. The method according to claim 8, comprising performing the selecting (410) of the humidity threshold by obtaining the humidity threshold by adding an increment to a base humidity threshold, the increment being selected based on the ambient humidity value such that the increment is negative when the ambient humidity value is above an ambient threshold and the increment is positive when the ambient humidity value is below the ambient threshold.

10. The method according to claim 8 or 9, comprising performing the selecting (410) of the humidity threshold value further based on an ambient temperature value obtained in the apparatus (170, 300) from an ambient temperature sensor (160) and describing an ambient temperature of the injection moulding machine (101).

11. The method according to any of claims 8 - 10, comprising performing the selecting (410) of the humidity threshold value further based on an ambient air pressure value obtained in the apparatus (170, 300) from an ambient air pressure sensor and describing an ambient air pressure of the injection moulding machine (101).

12. The method according to any of claims 8 - 11, further comprising obtaining a water flow velocity in a cooling channel in a mould of the injection moulding machine (101), and triggering an alert to be provided to the one or more user, the alert comprising an identity of the injection moulding machine (101) and an indication the alert relates to water flow, the method comprising performing the triggering of the alert responsive to the water flow velocity falling below a threshold velocity.

13. The method according to claim 12, further comprising selecting the threshold velocity based on an average of the water flow velocity over a period of time.

14. The method according to any one of claims 8 - 13, wherein the feed material comprises one or more of: polyethylene terephtalate, high-density polyethylene or polypropylene.

15. A non-transitory computer readable medium having stored thereon a set of computer readable instructions that, when executed by at least one processor (310), cause an apparatus (170, 300) to at least:
- select (410) a humidity threshold value based at least in part on an ambient humidity value, obtained in the apparatus (170, 300) from an ambient humidity sensor (150) and describing an ambient humidity of an injection moulding machine (101);
- obtain (420) a feed material humidity value from a humidity sensor (145) immersed in the feed material, and
- responsive to the feed material humidity value exceeding the humidity threshold value, trigger (430) an alarm to be provided to one or more user, the alarm comprising an identity of the injection moulding machine (101), or modify (430) a process parameter of the injection moulding machine (101).

16. A method for controlling an injection moulding process, comprising:
- storing a database comprising, for plural production lots of an injection moulding machine (101), a rate of defective products in the respective lot, and for each production lot a set of ambient conditions of the injection moulding machine (101), the set of ambient conditions being measured during a time when the injection moulding machine (101) produced the lot;
- including, in the database for each one of the plural production lots, temperature and humidity data of an feed material of the injection moulding machine (101) used in the production of the respective lot;
- selecting from among the plural production lots a lot for which the set of ambient conditions and the set of feed material humidity and feed material temperature most closely matches a set of current ambient conditions, a current feed material humidity and a current feed material temperature, and
- displaying to a user the rate of defective products of the selected production lot.
